# EUROPÄISCHE PATENTSCHRIFT

(11) **EP 1 203 532 B1**
(45) Veröffentlichungstag und Bekanntmachung des Hinweises auf die Patenterteilung: **21.07.2004**
(21) Anmeldenummer: 01115068.7
(22) Anmeldetag: 21.06.2001
(51) Int. Cl.: A01N 57/20

(54) **Feste Glyphosat-Formulierung und Verfahren zur Herstellung**
Solid glyphosate formulations and process for the preparation thereof
Formulations solides du glyphosate et procédé pour leur préparation

(30) Priorität: 23.10.2000 DE 10052489
(43) Veröffentlichungstag der Anmeldung: 08.05.2002
(73) Patentinhaber: SCHIRM AG, 44147 Dortmund (DE)
(72) Erfinder: Hamroll, Bernd, Dr., 39126 Magdeburg (DE); Dittrich, Günter, Dr., 39104 Magdeburg (DE); Müller, Bernd, Dr., 39122 Magdeburg (DE)
(74) Vertreter: Köckeritz, Günter

(56) Entgegenhaltungen:
- EP-A- 0 378 985
- EP-A- 0 719 500
- WO-A-00/28816
- WO-A-92/12637

## Beschreibung

Die Erfindung betrifft die Zusammensetzung einer festen, wasserlöslichen, den Wirkstoff Glyphosat enthaltenden Formulierung zur Abtötung und/oder Kontrolle von unerwünschtem Pflanzenwachstum und ein Verfahren zu deren Herstellung.

Glyphosat (N-Phosphonomethylglycin) ist allseits bekannt als gut wirksames und effektives Herbizid. Es ist auch bekannt, daß Glyphosat eine wenig wasserlösliche organische Säure darstellt. Deshalb wird die Glyphosat-Säure in ihren Anwendungsformen als wasserlösliches Salz zur Anwendung gebracht.
Weit verbreitet ist die Formulierung und Anwendung von Glyphosat als Ammonium-oder Isopropylammoniumsalz (US-P 3799758 und Proc. North Cent. Weed Control Conf., 1971, 26, 64).
Auch die Herstellung und Anwendung einer wasserlöslichen natriumsalz-haltigen Glyphosatformulierung ist Gegenstand zahlreicher Veröffentlichungen (z.B. US-P 4140513). WO 00/28816 beschreibt eine feste Zubereitung eines Pflanzenschutzmittels erhältlich durch Schmelzentrusion, anschließendes Kühlen, Brecher und/oder Mühlen, ggf. Klassieren und darauffolgendes Verpressen unter Zusatz von Tablettenhilfstoffen.

Es gehört weiterhin zum Stand der Technik, festen Glyphosat-Salz-Formulierungen Hilfsmittel und/oder wirkungsverbessernde Komponenten zuzusetzen.
Üblich sind dabei:
- Ionisch und nichtionische Tenside
- Bioaktivatoren
- Streck-,Binde und Füllmittel
- Antibackmittel
- Entschäumer
- Dickungsmittel

(EP 220902, EP 255760, EP 378985, EP 498145, EP 448538, WO 93/25081, Monsanto Research Disclosure Nr. 27161 "Novel Glyphosate acid wettcake powder formulation effective in control of weeds").

Handelsübliche flüssige Glyphosat-Formulierungen lassen sich in Wasser gut auf die erforderliche Anwendungskonzentration verdünnen. Nachteilig ist hier die geringe Transporteffektivität, da diese Formulierungen mehr als 50% Wasser enthalten.

Die Alternative dazu stellen feste wasserlösliche Formulierungen in Form von Granulaten, Pellets, Pasten oder sprühgetrockneten Pulvern dar. Der Nachteil bei diesen festen Formulierungen besteht in einem hohem Fertigungsaufwand, dergestalt, daß man überwiegend von einem Glyphosat wetcake oder einer slurry ausgehen muß, der nach der Homogenisierung der Komponenten unter hohem energetischem Aufwand das Wasser entzogen werden muß.

Für den Kleinanwender stellt es sich weiterhin nachteilig dar, dass er zum Einsatz auf kleinen Flächen Teilmengen abwiegen muß. Dabei kann es leicht zu Dosierungsfehlern wie Über- oder Unterdosierung kommen.

Die Aufgabe der Erfindung besteht deshalb darin, die o. g. Nachteile für den Kleinanwender zu vermeiden und eine gut dosierbare, rasch in Wasser lösliche, preislich günstige und somit anwenderfreundliche Zusammensetzung für eine Glyphosat-Salz-Feststoffformulierung sowie ein Verfahren zu deren Herstellung zu entwickeln.

Erfindungsgemäß wird diese Aufgabe durch die Merkmale der Ansprüche 1 und 6 gelöst. Vorteilhafte Ausbildungen der Erfindung sind in den Ansprüchen 2 und 3 enthalten. Demnach beinhaltet die Erfindung eine feste wasserlösliche, gärtnerisch und landwirtschaftlich nutzbare Zusammensetzung zur Abtötung und/oder Kontrolle von unerwünschtem Pflanzenwachstum mit dem herbiziden Wirkstoff Glyphosat in Form seiner Salze, wobei diese mindestens folgende Bestandteile enthält:
- 10 - 30 Gew.% N-Phosphonomethylglycin (Glyphosat),
- 12 - 52 Gew.% Alkali- oder Ammoniumhydrogencarbonat bzw. -carbonat,
- 10 - 20 Gew.% Zitronensäure, Oxalsäure oder Adipinsäure,
- 0,5 - 2 Gew. % wasserlösliche Cellulose,
- 8 - 12 Gew.% Alkylethersulfosuccinate, Alkyletherphosphate, ethoxylierte Fettamine und/oder ethoxylierte Fettalkohole,
- 50 - 60 Gew.% Alkali- oder Ammoniumhydrogencarbonat bzw. -carbonat, Ammoniumsulfat, Harnstoff,
- 0,2 - 1 Gew.% Polydimethylsiloxan und
- 1 - 5 Gew.% Polyethersiloxan.

Als salzbildende Kationen werden Natrium, Kalium und/oder Ammonium eingesetzt. Alkylethersulfosuccinate, Alkyletherphosphate, ethoxylierte Fettalkohole und/oder ethoxylierte Fettamine werden als Tenside eingesetzt. Die eingesetzten Tenside besitzen neben der oberflächenaktiven Wirkung weiterhin einen die herbiziden Wirkung verstärkenden Effekt (Bioaktivatoren). Als Bioaktivatoren werden zusätzlich auch Polyethersiloxane verwendet. Alkali- und/oder Ammoniumhydrogencarbonate bzw. -carbonate in Verbindung mit den organischen Säuren Citronensäure, Oxalsäure oder Adipinsäure und wasserlösliche Cellulose werden als kohlendioxidblasenproduzierende Zerfallsbeschleuniger eingesetzt , wobei Natrium-, Kalium- und/oder Ammoniumydrogencarbonat bzw. -carbonat, Harnstoff, Alkaliund/oder Ammoniumsulfat als Streck-,Binde- und/oder Füllmittel eingesetzt werden. Als Entschäumer werden Polydimethylsiloxane verwendet.
Es wurde überraschend gefunden, dass sich die homogenisierten Formulierungsbestandteile zu einer stabilen Tablette verpressen lassen und diese unter Aufsprudeln klar in Wasser löslich ist. Die Tablette läßt sich so portionieren bzw. dimensionieren, daß sie definiert die auszubringende Menge Glyphosat-Wirkstoff für 5, 10 oder 20 Liter Spritzbrühe enthält.
Die Herstellung dieser Feststoffformulierung erfolgt durch Verpressen der homogenisierten Formulierungsbestandteile in einer geeigneten Tablettiermaschine zu einer Sprudeltablette. Geeignet ist z.B. eine Tablettiermaschine vom Typ Korsch EK 4 für Tablettengewichte von 2 - 35 g. Die Tablettenmischung wird mit einem Druck von 70 - 80 Newton verpresst. Die resultierende Tablette ( z.B. für 10 Liter Spritzbrühe) hat ein Gewicht von 6 - 7g, einen Durchmesser von 30 mm und eine Höhe von 6 -8 mm.

## Patentansprüche

1. Feste wasserlösliche, gärtnerisch und landwirtschaftlich nutzbare. Zusammensetzung zur Abtötung und/oder Kontrolle von unerwünschtem Pflanzenwachstum mit dem herbiziden Wirkstoff Glyphosat in Form seiner Salze, wobei diese
• 10 - 30 Gew.-% N-Phosphonomethylglycin (Glyphosat), als herbizider Wirkstoff;
• 12 - 52 Gew.-% Alkali- oder Ammoniumhydrogencarbonat bzw. -carbonat als Salzbildner, Streckmittel und Zerfallsbeschleuniger;
• 10- 20 Gew.-% Zitronensäure, Oxalsäure oder Adipinsäure als Zerfallsbeschleuniger;
• 0,5 - 2 Gew. -% wasserlösliche Cellulose als Zerfallsbeschleuniger;
• 8 - 12 Gew.-% Alkylethersulfosuccinate, Alkyletherphosphate, ethoxylierte Fettamine und/oder ethoxylierte Fettalkohole, als oberflächenaktive Stoffe und/oder Bioaktivatoren;
• 50 - 60 Gew.-% Alkali- oder Ammoniumhydrogencarbonat bzw. -carbonat, Ammoniumsulfat, Harnstoff, als Binde- und/oder Füllmittel und/oder Zerfallsbeschleuniger;
• 0,2 - 1 Gew.-% Polydimethylsiloxan als Entschäumer;
• 1 - 5 Gew.-% Polyethersiloxan als oberflächenspannungsabsenkendes Mittel
enthält, wobei die homogene Mischung der Rezepturbestandteile bei einem Druck von 70 - 80 Newton zu Tabletten verpresst wird.

2. Zusammensetzung nach Anspruch 1, **dadurch gekennzeichnet, dass** diese 18-22 %, N-Phosphonomethylglycin (Glyphosat) enthält.

3. Zusammensetzung nach den Ansprüchen 1 und 2, **dadurch gekennzeichnet, dass** diese 10 Gew.% Alkylethersulfosuccinate, Alkyletherphosphate, ethoxylierte Fettamine und/oder ethoxylierte Fettalkohole enthält.

4. Zusammensetzung nach einem der obigen Ansprüche, **dadurch gekennzeichnet, dass** diese in Tablettenform vorliegt und unter Aufsprudeln klar in Wasser löslich ist.

5. Zusammensetzung nach einem der obigen Ansprüche , **dadurch gekennzeichnet, dass** die Tabletten derart portioniert bzw. dimensioniert sind, daß sie definiert die auszubringende Menge Glyphosat-Wirkstoff für 5, 10 oder 20 Liter einer Spritzbrühe enthalten.

## Claims

1. Solid, water-soluble composition, which is usable in the horticultural and agricultural sectors, for killing off and/or controlling unwanted vegetation using the herbicidal agent glyphosate in the form of its salts, wherein this latter contains
• 10 - 30 percent by weight N-(phosphonomethyl)glycine (glyphosate), as the herbicidal agent;
• 12 - 52 percent by weight alkali or ammonium hydrogencarbonate or respectively carbonate as a salt-forming substance, diluent and decomposition accelerant;
• 10 - 20 percent by weight citric acid, oxalic acid or adipic acid as a decomposition accelerant;
• 0.5 - 2 percent by weight water-soluble cellulose as a decomposition accelerant;
• 8 - 12 percent by weight alkyl ether sulphosuccinate, alkyl ether phosphate, ethoxylated fatty amine and/or ethoxylated fatty alcohols, as surface active substances and/or bio-activators;
• 50 - 60 percent by weight alkali or ammonium hydrogencarbonate or carbonate, ammonium sulphate and urea, as binding agent and/or filling agent and/or decomposition accelerant;
• 0.2 - 1 percent by weight polydimethyl siloxane as a defoamer;
• 1 - 5 percent by weight polyether siloxane as means for reducing the surface tension,
wherein the homogeneous mixture of the formula components is compressed at a pressure of 70 - 80 Newton to form tablets.

2. Composition according to claim 1, **characterised in that** said composition contains 18 - 22 percent by weight N-(phosphonomethyl)glycine (glyphosate).

3. Composition according to claims 1 and 2, **characterised in that** said composition contains 10 percent by weight alkyl ether sulphosuccinate, alkyl ether phosphate, ethoxylated fatty amine and/or ethoxylated fatty alcohols.

4. Composition according to one of the above claims, **characterised in that** said composition is available in tablet form and is effervescent in water to produce a clear solution.

5. Composition according to one of the above claims, **characterised in that** the tablets are apportioned or respectively dimensioned in such a manner that they contain, in a defined manner, the amount of glyphosate agent to be produced for 5, 10 or 20 litres of spray mixture.

## Revendications

1. Composition solide, hydrosoluble, utilisable pour le jardinage et l'agriculture, pour la destruction et/ou le contrôle de la croissance de plantes indésirables avec la substance active herbicide Glyphosat sous forme de ses sels,
celle ci-contenant:
• 10-30% en poids de N-phosphonométhylglycine (Glyphosat), en tant que substance active herbicide;
• 12-52% en poids de bicarbonate ou de carbonate alcalin ou d'ammonium comme agent de salification, diluant et accélérateur de décomposition;
• 10-20 % en poids d'acide citrique, acide oxalique ou acide adipique comme accélérateur de décomposition;
• 0,5-2% en poids de cellulose hydrosoluble comme accélérateur de décomposition;
• 8-12% en poids d'éther sulfosuccinate d'alkyle, étherphosphate d'alkyle, amines grasses éthoxylées, et/ou alcools gras éthoxylés, comme substances tensioactives et/ou bioactivateurs;
• 50-60% en poids de bicarbonate ou de carbonate alcalin ou d'ammonium, sulfate d'ammonium, urée, comme liant et/ou charge et/ou accélérateur de décomposition;
• 0,2-1% en poids de polydiméthylsiloxane comme agent anti-mousse;
• 1-5% en poids de polyéthersiloxane comme agent d'abaissement de la tension superficielle;
le mélange homogène des constituants de la formulation étant pressé en comprimés sous une pression de 70-80 newtons.

2. Composition selon la revendication 1, **caractérisée en ce que** celle-ci contient 18-22% de N-phosphométhylglycine (Glyphosat).

3. Composition selon les revendications 1 et 2 , **caractérisée en ce que** celle-ci contient 10% en poids d'éthersulfosuccinate d'alkyle, étherphosphate d'alkyle, amines grasses éthoxylées et/ou alcools gras éthoxylés.

4. Composition selon l'une quelconque des revendications précédentes, **caractérisée en ce qu'**elle se présente sous forme de comprimés et est soluble dans l'eau avec effervescence, en donnant une solution limpide.

5. Composition selon l'une quelconque des revendications précédentes, **caractérisée en ce que** les comprimés représentent des portions et sont dimensionnés de telle sorte qu'ils contiennent, de manière définie, la quantité de substance active Glyphosat à appliquer pour 5, 10 ou 20 litres d'une solution de pulvérisation.
